# EUROPÄISCHE PATENTSCHRIFT

(11) **EP 0 909 677 B1**
(45) Veröffentlichungstag und Bekanntmachung des Hinweises auf die Patenterteilung: **04.06.2003**
(21) Anmeldenummer: 98115887.6
(22) Anmeldetag: 22.08.1998
(51) Int. Cl.: B60N 2/44

(54) **Polster für einen Fahrzeugsitz**
Upholstery for vehicle seat
Capitonnage pour siège de véhicule

(30) Priorität: 15.10.1997 DE 19745521
(43) Veröffentlichungstag der Anmeldung: 21.04.1999
(73) Patentinhaber: DaimlerChrysler AG, 70567 Stuttgart (DE)
(72) Erfinder: Faust, Eberhard, 70597 Stuttgart (DE); Pfahler, Karl, Dr., 70180 Stuttgart (DE)

(56) Entgegenhaltungen:
- WO-A-97/09908
- DE-A- 3 903 303
- DE-C- 19 628 698
- US-A- 5 016 302

## Beschreibung

Die Erfindung betrifft ein Polster für einen Fahrzeugsitz gemäß dem Oberbegriff des Patentanspruchs 1.

Zur Belüftung von Fahrzeugsitzen ist es bereits vorgeschlagen worden, in der Polsterauflage des Sitz- oder Rücklehnenpolsters eine Vielzahl von über die Polsterflächen gleichmäßig verteilt angeordneten, einerseits frei an der Unterseite der Polsterauflage und andererseits an der Ventilationsschicht mündenden Luftkanälen vorzusehen und in diesen Luftkanälen jeweils einen Miniaturlüfter oder -ventilator anzuordnen (DE 196 28 698.0-16). Dadurch wird in der vorzugsweise als grobmaschiges Abstandsgewirk ausgebildeten Ventilationsschicht ein großer Luftdurchsatz erreicht, der durch die darüberliegende, luftdurchlässige Druckverteilungsschicht des Polsters hindurchtritt und in kurzer Zeit das z.3. beim Parken durch Sonneneinstrahlung aufgeheizte Polster auf eine komfortable Temperatur herunterkühlt. Dadurch, daß die Luft auf der Unterseite des Sitzes angesaugt wird, also in einem Bereich des Fahrzeuginnenraums, in dem die niedrigste Lufttemperatur herrscht, steigert sich die Wirksamkeit der Luftkühlung erheblich.

Eine solche Belüftung senkrecht durch das Polster hindurch ist in denjenigen Polsterbereichen nicht möglich, in denen in der Polsterauflage Luftkammern oder andere Aggregate angeordnet sind, die z.B. zur Verstellung der Sitzkontur dienen.

Der Erfindung liegt die Aufgabe zugrunde, bei einem Polster der eingangs genannten Art auch in solchermaßen problematischen Polsterbereichen, die sich insbesondere im Spiegelbereich von Sitzkissen und Rückenlehne eines Fahrzeugsitzes befinden, einen ausreichenden Luftdurchsatz durch den Polsterbereich hindurch sicherzustellen.

Die Aufgabe ist bei einem Polster für einen Fahrzeugsitz der im Oberbegriff des Patentanspruchs 1 definierten Gattung erfindungsgemäß durch die Merkmale im Kennzeichenteil des Patentanspruchs 1 gelöst.

Das erfindungsgemäße Polster hat den Vorteil, daß durch die erfindungsgemäße Ausbildung der an den Grenzen der problematischen Polsterbereiche liegenden Luftkanäle die Ventilationsluft schräg von der Seite her in den Polsterbereich eingeblasen wird. Ein großer Teil der Ventilationsluft tritt dabei senkrecht in die Querschnittsfläche der Ventilationsschicht ein und wird ohne Strömungsverluste direkt parallel zur Oberfläche weitergeleitet. Die über den gesamten Polsterbereich innerhalb der Ventilationsschicht strömende Luft tritt dann durch die restliche luftlässige Polsterstruktur, wie Durchverteilungsschicht und Polsterbezug, hindurch und führt auch in den problematischen Polsterbereichen optimal Wärme und Feuchtigkeit ab.

Vorteilhafte Ausführungsformen des erfindungsgemäßen Polsters mit zweckmäßigen Weiterbildungen und Ausgestaltungen der Erfindung sind in den weiteren Patentansprüchen angegeben.

Gemäß einer bevorzugten Ausführungsform der Erfindung ist der Luftkanal als eine mit einer Tülle versehene, zylindrische Hülse, vorzugsweise aus Kunststoff, ausgebildet und in einer Ausnehmung in der Polsterauflage eingesetzt. Dabei ist ein Teil der Ventilationsschicht über die Austrittsöffnung der Tülle hinweg in die Tülle so eingeführt, daß die offene Querschnittsfläche der Ventilationsschicht vom Luftstrom im Luftkanal beaufschlagt wird. Ein strömungsgünstig ausgebildeter Steg im Bereich der Austrittsöffnung der Tülle sorgt dafür, daß die Polsteroberfläche im Bereich der Tülle nicht einfällt. Durch diese konstruktiven Maßnahmen wird eine Optimierung der Lufteinströmung in die Ventilationsschicht sichergestellt.

Die Erfindung ist anhand eines in der Zeichnung dargestellten Ausführungsbeispiels im folgenden näher beschrieben. Es zeigen jeweils in schematischer Darstellung:
- Fig. 1: ausschnittweise einen Querschnitt eines Rückenlehnenpolsters mit Lehnenspiegel und Randwülsten,
- Fig. 2: eine vergrößerte Darstellung des Ausschnitts II in Fig. 1,
- Fig. 3: eine perspektivische Darstellung einer zur Bildung eines Luftkanals in das Polster einsatzbaren Hülse,
- Fig. 4: eine Draufsicht der Hülse in Richtung Pfeil IV in Fig. 3.

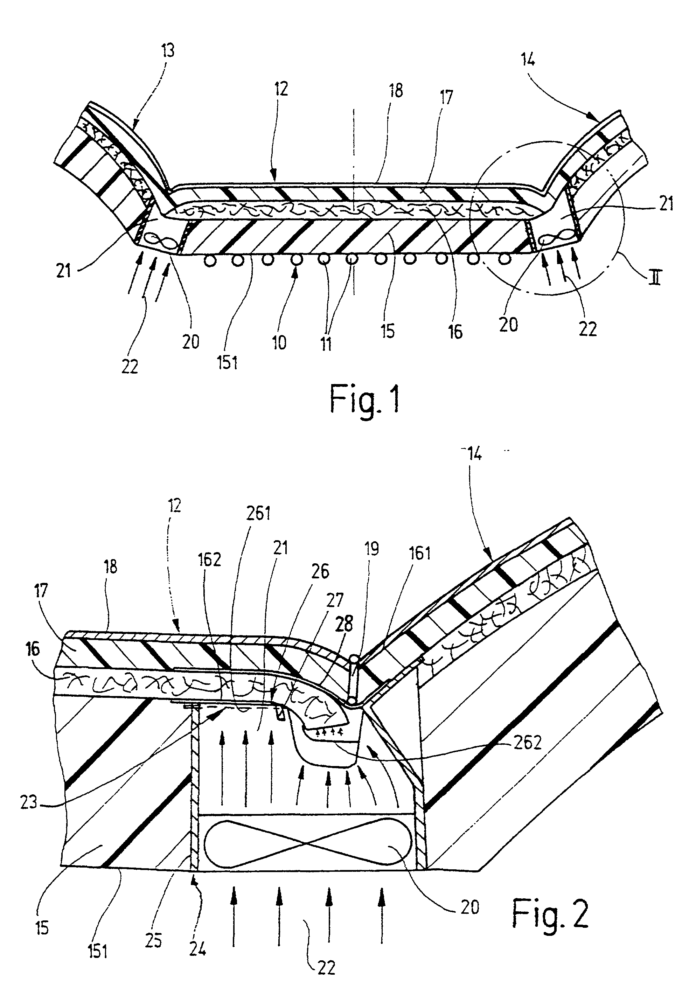

Das in Fig. 1 im Querschnitt ausschnittweise dargestellte Lehnenpolster für die Rückenlehne eines Kraftfahrzeugsitzes ist auf einem Polsterträger 10 befestigt, der im Ausführungsbeispiel in Fig. 1 durch Spanndrähte 11 angedeutet ist, die in einem hier nicht dargestellten Lehnenrahmen aufgespannt sind. Das Lehnenpolster ist mit einem Lehnenspiegel 12 und zwei seitlichen Randwülsten 13,14 ausgeführt. Das Polster umfaßt eine auf dem Polsterträger 10 aufliegende Polsterauflage 15, eine die Polsterauflage 15 im Bereich des Lehnenspiegels 12 ganzflächig überziehende, luftdurchflutbare Ventilationsschicht 16 aus einem grobmaschigen Abstandsgewirk, eine auf der Ventilationsschicht 16 aufliegende, luftdurchlässige Druckverteilungsschicht 17, die aus einem Abstandsgewirk, einem Vlies oder einem offenporigen Schaum bestehen kann, und einen die Oberfläche des Polster überspannenden, luftdurchlässigen Polsterbezug 18. In den Randwülsten 13,14 erfolgt die Belüftung über hier nicht dargestellte separate Lüfter. Die Ausformung von Lehnenspiegel 12 und Randwülsten 13,14 im Polster erfolgt durch sog. Abheftkanäle, von denen ein Abheftkanal 19 in Fig. 2 zu sehen ist. Diese trennen den Luftstrom, der in den Spiegelbereich gelangt von dem Randwulstbereich ab.

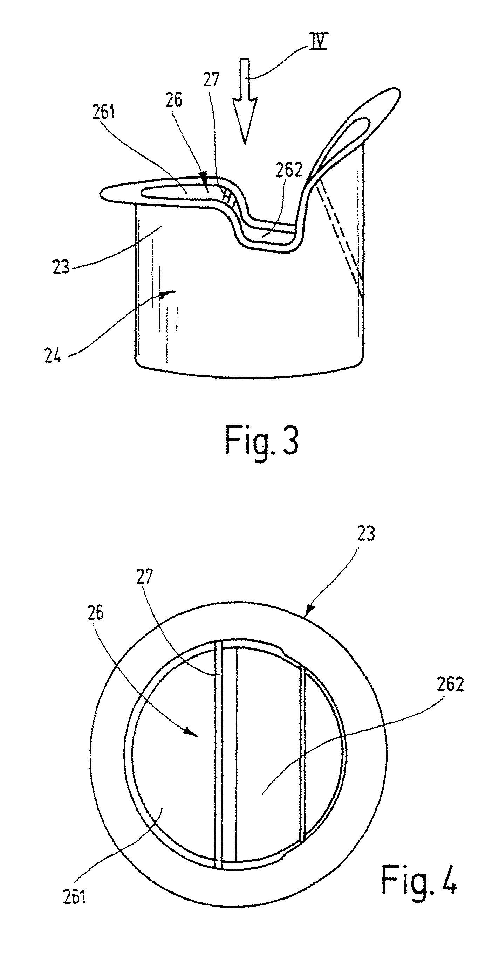

Zur Steigerung des Sitzkomforts ist das Lehnenpolster aktiv belüftet, um beispielsweise das beim Parken durch Sonneneinstrahlung aufgeheizte Polster zu kühlen oder von dem Sitzenden erzeugte Feuchtigkeit vom Polsterbezug 18 abzuführen. Die aktive Belüftung erfolgt durch Miniaturlüfter 20, auch Miniventilatoren genannt, die Luft von der Rückseite des Polsters her ansaugen und durch das Polster hindurchdrücken, wobei die Luft über den Polsterbezug 18 wieder abströmt. Jeder Miniaturlüfter 20 ist hierzu in einen Luftkanal 21 eingesetzt, der die Polsterauflage 15 vollständig durchdringt, bis zur Ventilationsschicht 16 reicht und auf der Rückseite 151 der Polsterauflage 15 offen ist. Da üblicherweise im Bereich des Lehnenspiegels 12 Luftkammern oder andere Aggregate innerhalb der Polsterauflage 15 angeordnet sind, die beispielsweise zur Verstellung der Sitzkontur oder zur Abstützung der Lendenlordose des Sitzenden dienen, können die Luftkanäle 21 nicht - wie dies für eine optimale Durchlüftung des Polsters wünschenswert wäre - gleichmäßig verteilt im gesamten Lehnenspiegel 12 angeordnet werden. Um trotzdem diesen Bereich, in dem keine Direktbelüftung möglich ist, optimal zu belüften, sind die Luftkanäle 21 - wie dies in Fig. 1 dargestellt ist - im Übergangsbereich vom Lehnenspiegel 12 zu den Randwülsten 13,14 angeordnet und ist das der Ventilationsschicht 16 zugekehrte Ende des Luftkanals 21 so ausgebildet, daß ein Teil des den Luftkanal 21 durchströmenden Luftstroms, der in Fig.1 mit Pfeilen 22 gekennzeichnet ist, in die offene Querschnittsfläche 161 der Ventilationsschicht 16 eintritt. Wie aus der vergrößerten Darstellung in Fig. 2 und aus Fig. 3 und 4 zu entnehmen ist, ist jeder Luftkanal 21 von einer mit einer Tülle 23 versehenen zylindrische Hülse 24 gebildet, die in eine Ausnehmung 25 in der Polsterauflage 15 eingesetzt ist. Tülle 23 weist eine Austrittsöffnung 26 auf, die schräg zur Hülsenachse ausgerichtet ist und aus einem höhergelegenen oder weiter vorstehenden Öffnungsabschnitt 261 und einem tiefergelegenen oder zurückversetzten Öffnungsabschnitt 262 zusammengesetzt ist. Im Übergangsbereich der beiden Öffnungsabschnitte 261,262 ist ein strömungsgünstig ausgebildeter Steg 27 angeordnet, der sich über die gesamte Öffnungsbreite des weiter vorstehenden Öffnungsabschnitts 261 erstreckt.

Wie aus Fig. 2 zu erkennen ist, ist im Bereich des Luftkanals 21 ein Teil der Ventilationsschicht 16 über den weiter vorstehenden Öffnungsabschnitt 261 hinweg geführt, so daß ihre Unterseite 162 den weiter vorstehenden Öffnungsabschnitt 261 abdeckt, und ist mit ihrer Querschnittsfläche 161 in den zurückgesetzten Öffnungsabschnitt 262 eingesteckt. Der Steg 27 verhindert, daß die Ventilationsschicht 16 in den weiter vorstehenden Öffnungsabschnitt 261 einsinkt und damit die Polsteroberfläche einfällt. Sie dient weiterhin zur Fixierung der Querschnittsfläche 161 der Ventilationsschicht 16 in der Tülle 23. Die vom Miniaturlüfter 20 auf der Rückseite 151 der Polsterauflage 15 angesaugte Luft 22 strömt zum größten Teil direkt in die offene Querschnittsfläche 161 der Ventilationsschicht 16 ein und wird in der Ventilationsschicht 16 ohne Strömungsverluste direkt parallel zur Oberfläche weitergeleitet. Ein kleinerer Teil des angesaugten Luftstroms 22 tritt an der Unterseite 162 der Ventilationsschicht 16 in diese ein, wobei diesem Luftstrom ein wesentlich größerer Strömungswiderstand von der Ventilationsschicht 16 entgegengesetzt wird. Ist - wie dies in Fig. 2 dargestellt ist - oberhalb der Austrittsöffnung 26 der Tülle 23 zwischen Ventilationsschicht 16 und Druckverteilungsschicht 17 noch eine Sperrfolie 28 eingelegt, so wird dieser Teil des Luftstromes in der Ventilationsschicht 16 umgelenkt und ebenfalls in der Ventilationsschicht 16 entlanggeführt. Die Sperrfolie 28 dient gleichzeitig dazu, den Abheftkanal 19 abzudecken, so daß Luft aus dem Luftkanal 21 nicht über den Abheftkanal 19 entweichen kann.

Die Erfindung ist nicht auf das vorstehend beschriebene Lehnenpolster für die Rückenlehne eines Fahrzeugsitzes beschränkt. Das erfindungsgemäße Polster kann selbstverständlich auch als Sitzpolster für das Sitzkissen des Fahrzeugsitzes verwendet werden. Auch im Sitzspiegel eines Sitzkissens treten Problemzonen auf, in denen keine Direktbelüftung möglich ist, weil z.B. hier in der Polsterauflage Luftblasen zur Sitzkonturverstellung angeordnet sind. Die wiederum am Rand des Problembereichs angeordneten Luftkanäle, die wie vorstehend beschrieben ausgebildet sind, sorgen aber trotzdem für eine optimale aktive Belüftung dieses Polsterbereichs.

## Patentansprüche

1. Polster für einen Fahrzeugsitz mit einer Polsterauflage und einer diese überziehenden, luftdurchflutbaren Ventilationsschicht, sowie mit einer Mehrzahl von die Polsterauflage vollständig durchdringenden, auf der Rückseite der Polsterauflage offenen Luftkanälen, in denen jeweils ein Miniaturlüfter zum Einblasen von Luft in die Ventilationsschicht angeordnet ist,
**dadurch gekennzeichnet,**
**daß** das der Ventilationsschicht (16) zugekehrte Ende von ausgewählten Luftkanälen so ausgebildet ist, daß ein Teil des den Luftkanal (21) durchsetzenden Luftstroms (22) in den offenen Querschnitt (161) der Ventilationsschicht (16) eintritt.

2. Polster nach Anspruch 1,
**dadurch gekennzeichnet,**
**daß** der Luftkanal (21) von einer mit einer Tülle (23) versehenen, vorzugsweise zylindrischen Einsetzhülse (24) gebildet ist, die in eine Ausnehmung (25) in der Polsterauflage (15) eingesetzt ist.

3. Polster nach Anspruch 2,
**dadurch gekennzeichnet,**
**daß** die Ventilationsschicht (16) im Bereich des Luftkanals (21) teilweise über die Austrittsöffnung (26) der Tülle (23) hinweg in die Tülle (23) so eingeführt ist, daß ihre offene Querschnittsfläche (161) vom Luftstrom (22) im Luftkanal (21) beaufschlagt ist.

4. Polster nach Anspruch 3,
**dadurch gekennzeichnet,**
**daß** die Austrittsöffnung (26) der Tülle (23) schräg zur Achse der Hülse (24) ausgerichtet ist und einen weiter vorstehenden Öffnungsabschnitt (261) und einen dagegen zurückversetzten Öffnungsabschnitt (262) aufweist und daß die Ventilationsschicht (16) mit ihrer Unterseite (162) den weiter vorstehenden Öffnungsabschnitt (261) überdeckt und mit ihrer Querschnittsfläche (161) in den dagegen zurückversetzten Öffnungsabschnitt (262) eingeführt ist.

5. Polster nach Anspruch 4,
**dadurch gekennzeichnet,**
**daß** im Übergangsbereich beider Öffnungsabschnitte (261,262) ein über die Öffnungsbreite des weiter vorstehenden Öffnungsabschnitts (261) sich erstreckender Steg (27) angeordnet ist.

6. Polster nach Anspruch 4 oder 5,
**dadurch gekennzeichnet,**
**daß** der oberhalb der Austrittsöffnung (26) der Tülle (23) liegende Bereich der Ventilatiosschicht (16) auf der von der Tülle (23) abgekehrten Seite der Ventilationsschicht (16) mit einer luftundurchlässigen Sperrschicht, vorzugsweise Sperrfolie (28), abgedeckt ist.

## Claims

1. Upholstery for a vehicle seat, with a cushion rest (15) and, covering this, a ventilation layer (16) formed as a coarse-meshed, air-permeable spacer fabric, and with a plurality of air ducts (21) which pass completely through the cushion rest and are open at the back of the cushion rest, a miniature fan (20) being arranged in each such air duct to blow air into the ventilation layer (16),
**characterised in that**
the end of selected air ducts (21) facing towards the ventilation layer (16) is formed such that part of the airflow (22) passing through each such air duct (21) enters the open cross-section (161) of the ventilation layer (16), which offers essentially lower flow resistance.

2. Upholstery according to Claim 1,
**characterised in that**
the air duct (21) is formed as a preferably cylindrical insertion sleeve (24) provided with an outlet element (23), the sleeve being inserted through a cutout (25) in the cushion rest (15).

3. Upholstery according to Claim 2,
**characterised in that**
in the area of the air duct (21) part of the ventilation layer (16) is turned in through the outlet opening (26) of the outlet element (23) in such manner that its open cross-section area (161) is in the path of the airflow (22) in the air duct (21).

4. Upholstery according to Claim 3,
**characterised in that**
the outlet opening (26) of the outlet element (23) is directed obliquely to the axis of the sleeve (24) and comprises an opening section (261) which projects and an opening section (262) set back relative thereto, and the underside of the ventilation layer (16) covers the projecting opening section (261) while its cross-section area (161) is turned into the opening section (262) set back relative thereto.

5. Upholstery according to Claim 4,
**characterised in that**
in the transition zone between the two opening sections (261, 262) is arranged a web (27) which extends across the aperture width of the projecting opening section (261).

6. Upholstery according to Claims 4 or 5,
**characterised in that**
the area of the ventilation layer (16) lying above the outlet opening (26) of the outlet element (23) is covered, on the side of the ventilation layer (16) facing away from the outlet element (23), by a blocking layer impermeable to air, preferably a blocking foil (28).

## Revendications

1. Capitonnage pour un siège de véhicule avec un support de capitonnage (15) et une couche de ventilation (16) perméable à l'air, déposée sur celui-ci sous la forme d'un tissu d'espacement à larges mailles, ainsi qu'avec une pluralité de canaux à air (21), ouverts dans la face arrière du support de capitonnage et traversant entièrement le support de capitonnage, dans lesquels est chaque fois disposé un ventilateur miniature (20) destiné à insuffler de l'air dans la couche de ventilation (16), **caractérisé en ce que** l'extrémité, tournée vers la couche de ventilation (16), de canaux à air (21) sélectionnés est configurée de telle façon qu'une partie du courant d'air (22) parcourant le canal à air (21) respectif pénètre dans la section transversale ouverte (161) de la couche de ventilation (16), qui présente une résistance à l'écoulement nettement plus faible.

2. Capitonnage selon la revendication 1, **caractérisé en ce que** le canal à air (21) est formé par une douille encastrée (24), de préférence cylindrique, pourvue d'un chapiteau (23), qui est encastrée dans un évidement (25) dans le support de capitonnage (15).

3. Capitonnage selon la revendication 2, **caractérisé en ce que** la couche de ventilation (16) est, dans la région du canal à air (21), insérée en partie dans le chapiteau (23) par de l'ouverture de sortie (26) du chapiteau (23), de telle manière que la face ouverte (161) de sa section transversale soit exposée au courant d'air (22) dans le canal à air (21).

4. Capitonnage selon la revendication 3, **caractérisé en ce que** l'ouverture de sortie (26) du chapiteau (23) est orientée en oblique par rapport à l'axe de la douille (24) et présente une partie d'ouverture plus en saillie (261) et une partie d'ouverture (262) en retrait par rapport à celle-ci, et **en ce que** la couche de ventilation (16) recouvre par sa face inférieure (162) la partie d'ouverture plus en saillie (261) et est introduite par la face (161) de sa section transversale dans la partie d'ouverture (262) en retrait par rapport à celle-ci.

5. Capitonnage salon la revendication 4, **caractérisé en ce qu'**une nervure (27) s'étendant sur la largeur d'ouverture de la partie d'ouverture plus en saillie (261) est disposée dans la région de transition entre les deux parties d'ouverture (261, 262) .

6. Capitonnage selon la revendication 4 ou 5, **caractérisé en ce que** la région de la couche de ventilation (16) située au-dessus de l'ouverture de sortie (26) du chapiteau (23) est recouverte, sur la face de la couche de ventilation (16) située à l'opposé du chapiteau (23), par une couche d'arrêt imperméable à l'air, de préférence un film d'arrêt (28).
